# FASCICULE DE BREVET EUROPEEN

(11) **EP 0 735 839 B1**
(45) Date de publication et mention de la délivrance du brevet: **29.12.1997**
(21) Numéro de dépôt: 95904586.5
(22) Date de dépôt: 21.12.1994
(51) Int. Cl.: A47J 37/08

(54) **APPAREIL ELECTRIQUE POUR LE GRILLAGE OU RECHAUFFAGE D'ALIMENTS, EN PARTICULIER GRILLE-PAIN, A SOUS-ENSEMBLES DE GRILLAGES DEPLACABLES A L'AIDE DE BRAS DE DEPLACEMENT**
ELEKTRISCHES GRILL- ODER WÄRMEGERÄT FÜR NAHRUNGSMITTEL, INSBESONDERE BROT, MIT AN BEWEGLICHEN ARMEN GELAGERTEN RÖSTEINHEITEN
ELECTRICAL FOOD TOASTING OR HEATING APPLIANCE, PARTICULARLY A TOASTER, HAVING TWO TOASTING SUB-ASSEMBLIES MOVED BY CONTROL ARMS

(30) Priorité: 21.12.1993 FR 9315667
(43) Date de publication de la demande: 09.10.1996
(73) Titulaire: SEB S.A., 69130 Ecully (FR)
(72) Inventeur: BALANDIER, Jean-Marie, F-88400 Gérardmer (FR); ROUSSEAU, Alain, F-88120 Le Syndicat (FR)
(86) Numéro de dépôt international: FR9401511
(87) Numéro de publication internationale: WO9517123

(56) Documents cités:
- US-A- 2 355 153
- US-A- 2 788 734
- US-A- 2 910 929

## Description

### DOMAINE TECHNIQUE

La présente invention se rapporte au domaine technique général des appareils électriques destinés au grillage, ou réchauffage, et / ou à la cuisson d'aliments d'épaisseurs diverses par l'intermédiaire d'ensembles chauffants destinés à serrer les aliments, tels que des grille-pain, des grille-viande ou encore des fours réchauffeurs.

La présente invention concerne un appareil électrique pour le grillage ou le réchauffage d'aliments, en particulier un grille-pain, comportant un boitier avec deux sous-ensembles de grillage montés déplaçables relativement l'un en face de l'autre pour former une fente de grillage de largeur variable apte à s'adapter à l'épaisseur de l'article à griller, un chariot porte-pain mobile axialement dans la fente entre une position haute de réception de l'article à griller et une position basse de grillage, ainsi qu'un moyen de commande du déplacement du chariot porte-pain associé à un moyen d'actionnement capable d'assurer le déplacement relatif des deux sous-ensembles de grillage.

### TECHNIQUE ANTERIEURE

Il est déjà connu, par exemple dans la demande de brevet FR-A-2454788, de réaliser un grille-pain électrique du genre mentionné précédemment, comportant un boîtier avec deux sous-ensembles de grillage montés mobiles relativement l'un en face de l'autre.

Chaque sous-ensemble de grillage est constitué d'un récepteur, d'un élément chauffant telle qu'une tige en matériau réfractaire sur laquelle est enroulée une résistance chauffante, et d'une grille destinée à venir en contact avec la tranche de pain à griller pour la serrer contre la grille du second sous-ensemble.

Le déplacement relatif des sous-ensembles de grillage est assuré par un système de deux branches articulées en ciseau associées aux grilles, et disposées latéralement sur le bâti de l'appareil.

Un tel grille-pain donne entière satisfaction lorsque la largeur de la fente de grillage délimitée entre les deux sous-ensembles de grillage ne dépasse pas 35 voire 40 mm. Cette distance correspond aux grille-pain standards, largement répandus sur le marché.

Pour de telles largeurs de la fente de grillage, la distance de déplacement des deux sous-ensembles de grillage est suffisamment limitée pour qu'aucun problème particulier de blocage, rupture, torsion ou autre, des pièces mobiles ne soit relevé. Il est alors possible de bénéficier pleinement de l'avantage de tels grille-pain, qui en raison de la mobilité des résistances chauffantes permettent de maintenir une distance constante entre l'article à griller et l'élément chauffant quelle que soit l'épaisseur de l'article.

Ceci constitue un élément de simplification de l'ensemble des possibilités de réglage de l'appareil et conduit à une meilleure maîtrise du résultat et de la qualité du grillage, et par conséquent améliore globalement l'homogénéité du grillage.

Les systèmes de l'art antérieur, tels que ceux décrits précédemment, ne peuvent cependant convenir parfaitement dès lors que l'on se propose de fournir un grille-pain à capacité variable de grande largeur, c'est-à-dire dont la fente de grillage peut permettre l'introduction de tranches de pain ou articles panifiés d'épaisseur supérieure à 35 ou 40 mm.

En effet, dans un tel cas, le déplacement du ou des sous-ensembles de grillage doit s'effectuer sur une distance relativement importante, alors même qu'en raison de la présence sur chaque sous-ensemble de plusieurs éléments, les sous-ensembles sont déjà d'un poids conséquent.

Si l'on souhaite en même temps obtenir un appareil électrique, tel qu'un grille-pain, d'encombrement réduit et de coût limité, il s'avère nécessaire d'envisager d'autres solutions.

### EXPOSE DE L'INVENTION

L'objet de la présente invention vise précisément à remédier aux diverses difficultés mentionnées précédemment et à fournir un appareil électrique de grillage ou réchauffage permettant de faciliter le déplacement des sous-ensembles de grillage quelle que soit la longueur de ce déplacement sans pour autant augmenter l'encombrement et le coût de l'appareil, et tout en réduisant les risques de défaut de manipulation.

Un autre objet de l'invention vise à fournir un appareil électrique de grillage ou réchauffage permettant un déplacement particulièrement équilibré des sous-ensembles de grillage.

Un autre objet de l'invention vise à fournir un appareil électrique de grillage ou réchauffage dont le déplacement des sous-ensembles de grillage est obtenu sans désaxage ni torsion.

Un objet complémentaire de l'invention vise à fournir un appareil électrique de grillage ou réchauffage de grande largeur.

Un autre objet de l'invention vise à fournir un appareil électrique de grillage ou réchauffage dont l'opération de fermeture est facilitée.

Les objets assignés à l'invention sont atteints à l'aide d'un appareil électrique de grillage ou réchauffage d'aliments, en particulier grille pain comportant un boîtier avec un sous-ensemble fixe de grillage et un sous-ensemble de grillage monté mobile en éloignement et rapprochement du sous-ensemble fixe par l'intermédiaire d'un support pour former une fente de grillage de largeur variable apte à s'adapter à l'épaisseur de l'article à griller, ledit support comprenant deux bras latéraux s'étendant le long des flancs du sous-ensemble mobile et supportés à rotation par leurs extrémités sur le boîtier, un chariot porte-pain mobile axialement dans la fente entre une position haute de réception de l'article à griller et une position basse de grillage, et un moyen de commande du déplacement du chariot porte-pain mobile associé à un organe d'actionnement apte à assurer le déplacement relatif des deux sous-ensembles caractérisé en ce qu'il comporte :
- au moins un bras stabilisateur, disposé en face arrière du sous-ensemble mobile, relié par une première articulation à ladite face arrière et par une seconde articulation au boîtier.

### DESCRIPTION SOMMAIRE DES DESSINS

D'autres caractéristiques et avantages de l'invention ressortiront mieux à la lecture de la description donnée ci-après, à titre d'exemples non limitatifs, en référence aux dessins annexés dans lesquels :
- La figure 1 montre selon une vue en perspective partielle, un exemple de grille-pain conforme à l'invention.
- La figure 2 montre selon une coupe transversale, un grille-pain conforme à l'invention, en position d'ouverture maximale.
- La figure 3 montre selon une coupe transversale identique à celle montrée à la figure 2, un grille-pain conforme à l'invention en position de fermeture correspondant à la largeur minimale de la fente de grillage.
- Les figures 4 et 5 montrent selon des vues latérales partielles, décalées de 90°, un moyen d'actionnement du déplacement des sous-ensembles de grillage et la position basse de butée du chariot de commande.
- Les figures 6 et 7 montrent selon des vues latérales partielles, décalées de 90°, la position haute de réception du chariot porte-pain mobile.
- Les figures 8 et 9 montrent selon des vues latérales partielles, décalées de 90°, la position basse du chariot porte-pain mobile combinée à la position haute du chariot de commande.

### MEILLEURE MANIERE DE REALISER L'INVENTION

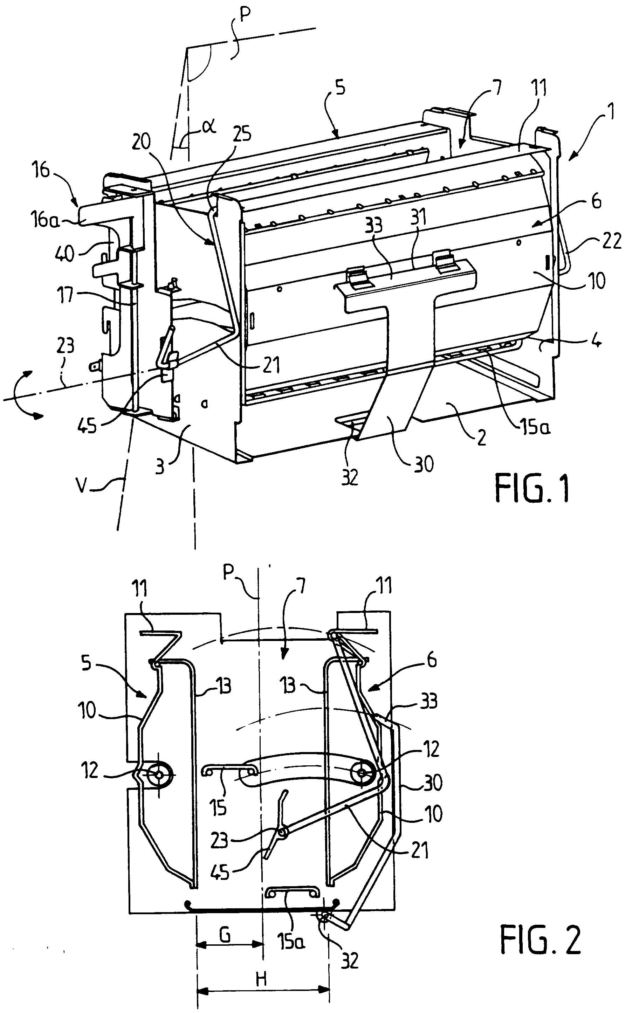

La figure 1 montre les principales pièces constituant la structure interne d'un grille-pain conforme à l'invention.

Le grille-pain comporte un boîtier 1, de préférence métallique incluant une embase 2 reliée par ses deux extrémités à deux flancs latéraux 3, 4 et deux sous-ensembles de grillage 5, 6, montés déplaçables relativement l'un en face de l'autre sur le boitier 1 entre les flancs latéraux 3,4.

Les deux sous-ensembles de grillage 5, 6 forment entre eux une fente de grillage 7, de plan de symétrie P sensiblement vertical, ladite fente étant de largeur variable et apte à s'adapter à l'épaisseur de l'article à griller par déplacement relatif des sous-ensembles de grillage 5,6.

Chaque sous-ensemble de grillage 5, 6 comprend un réflecteur 10, en un matériau métallique, présentant une concavité dirigée vers la fente de grillage 7 de manière à pouvoir réfléchir l'énergie thermique en direction de l'article à griller.

Au moins un des sous-ensembles de grillage 5, 6 comprend dans sa partie supérieure un bord 11 replié vers l'extérieur du grille-pain.

Chaque sous-ensemble de grillage 5, 6 est également pourvu d'au moins un élément chauffant 12 constitué par exemple de barreaux chauffants incluant un noyau en matériau réfractaire, de type stéatite, sur lequel est enroulé un fil résistif.

Les éléments chauffants 12 s'étendent longitudinalement dans chaque réflecteur 10 et sont solidaires de ces derniers.

Chaque sous-ensemble de grillage 5, 6 est complété par une grille de serrage 13 délimitant entre elles la fente de grillage 7 et joignant la partie supérieure du réflecteur 10 à sa partie inférieure pour enserrer chaque élément chauffant 12.

La grille de serrage 13 est destinée à venir enserrer les articles à griller tels que des tranches de pain qui sont insérées dans la fente de grillage 7. A titre de variante, il est possible d'avoir recours à un élément chauffant 12 assurant le grillage par contact et non pas par rayonnement, tel qu'une plaque de contact. Dans ce cas, la grille de serrage 13, du ou des sous-ensembles 5,6 peut être supprimée.

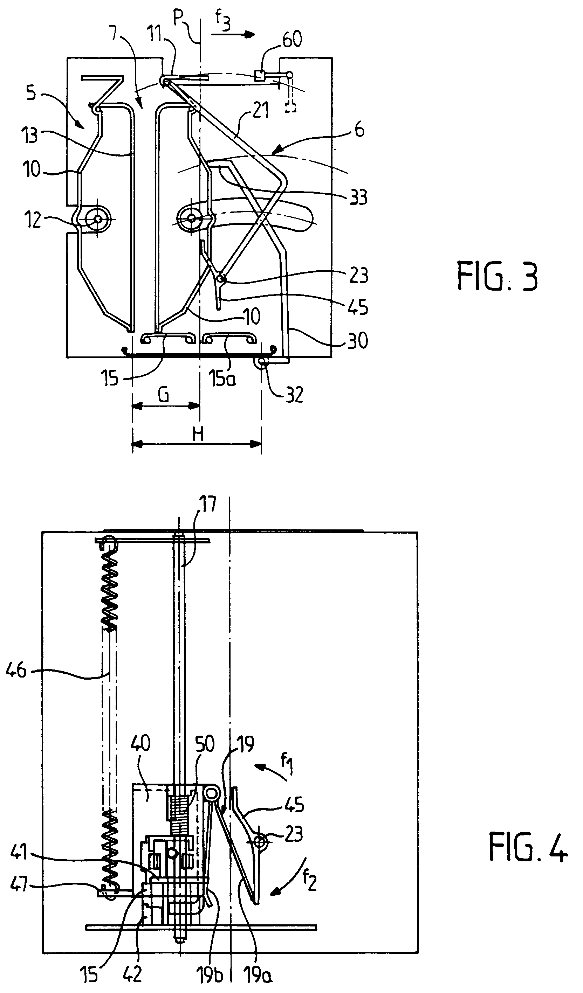

Le grille-pain conforme à l'invention comporte également, de manière connue, un chariot porte-pain mobile 15 se déplaçant dans la fente de grillage 7 selon son axe, de préférence sensiblement verticalement entre une position haute de réception de l'article à griller (figure 2) et une position basse de grillage (figure 3).

Le chariot porte-pain mobile 15, constitué par exemple d'un élément grillagé métallique, est solidaire d'un moyen de commande de déplacement 16 monté à coulissement sur une colonne 17. Cette dernière s'étend sensiblement verticalement le long et à l'extérieur du flanc latéral 3.

Le moyen de commande du déplacement 16 est par exemple constitué d'un chariot de commande 40 pourvu d'un bras de manoeuvre 16a accessible par l'utilisateur de l'extérieur du boîtier, afin de pouvoir manoeuvrer axialement le chariot porte-pain mobile 15.

De manière connue en soi, le moyen de commande du déplacement 16 est associé à un moyen d'actionnement 19 (figure 4) apte à assurer le déplacement relatif en éloignement ou rapprochement des deux sous-ensembles de grillage 5, 6.

Selon une version préférentielle de l'invention, le grille-pain est constitué d'un sous-ensemble de grillage fixe 5 monté solidaire du boîtier 1, en regard d'un sous-ensemble de grillage mobile 6. Ce dernier est monté mobile en éloignement et rapprochement du sous-ensemble fixe 5 par l'intermédiaire d'un support 20 comprenant d'une part, deux bras latéraux 21, 22 s'étendant le long des flancs latéraux 3,4. Les bras latéraux 21, 22 et de préférence leurs extrémités inférieures, sont montés et supportés à rotation sur le boîtier 1 autour d'un axe 23.

Le support 20 comporte également un bras intermédiaire 25, formant un bras de poussée ou de tirage, solidaire du sous-ensemble mobile 6, et joignant les deux bras latéraux 21, 22.

Selon une version particulièrement avantageuse de l'invention, le support 20 est constitué d'une tige métallique repliée en U, de telle manière que les deux bras latéraux 21, 22 et le bras intermédiaire 25 forment un support sensiblement en U dont le bras intermédiaire 25 s'étend le long et contre la partie supérieure du sous-ensemble mobile 6, et avantageusement sous le pli formé par le bord 11, en appui contre le réflecteur 10.

Pour des raisons d'encombrement et d'agencement au sein même du boîtier 1, chaque bras latéral 21, 22 peut présenter des formes diverses et en particulier former tel que cela est montré aux figures 2 et 3, un V s'étendant sensiblement dans un plan vertical.

Selon une autre version particulièrement avantageuse de l'invention, le sous-ensemble de grillage mobile 6 est associé à au moins un bras stabilisateur 30, disposé en face arrière du réflecteur 10 et relié par une première articulation 31 à ladite face arrière, et par une seconde articulation 32 au boîtier 1.

Selon la variante préférentielle de l'invention montrée aux figures 1 à 3, le bras stabilisateur 30 est constitué par une plaque métallique, de préférence en forme de T dont la barre supérieure 33 est par exemple clipsée sur la face arrière du réflecteur 10 dans des encoches, sensiblement en position centrale. La partie inférieure de la branche principale du T est solidaire, de manière préférentielle, de l'embase 2.

Le système de déplacement du sous ensemble de grillage 6 décrit précédemment, est plus particulièrement, mais non exclusivement, destiné à équiper des grille-pain de grande largeur, c'est-à-dire comportant une fente de grillage 7, qui, dans la position la plus éloignée des deux sous-ensembles de grillage 5,6, est au moins égale à 35 mm, et de préférence comprise entre 35 et 65 mm.

De tels grille-pain, impliquent en conséquence un déplacement sur une distance relativement longue du sous-ensemble de grillage mobile 6, tout en permettant l'introduction d'articles à griller de dimensions importantes. Le système de déplacement du sous-ensemble mobile 6, formé par le support 20 et le bras stabilisateur 30, constitue ainsi un système à parallélogramme, dans lequel les bras 21, 22 d'une part, et le bras stabilisateur 30 d'autre part, correspondent à des bielles mobiles. Pour maintenir, lors du déplacement du sous-ensemble mobile 6, une position de son plan d'extension sensiblement parallèle au plan P, quelle que soit la forme du pain, et conserver un appareil de dimension réduite, la distance entre l'axe de rotation 23 et le bras 25 est aussi grande que possible d'une part, et la distance entre la seconde articulation 32 et l'axe de rotation 23 est également aussi importante que possible d'autre part. Le débattement vertical du sous-ensemble mobile 6 est ainsi limité, tout en permettant une rotation également limitée, de l'ordre de quelques degrés, autour respectivement de l'axe 23, de la première articulation 31 et de la seconde articulation 32.

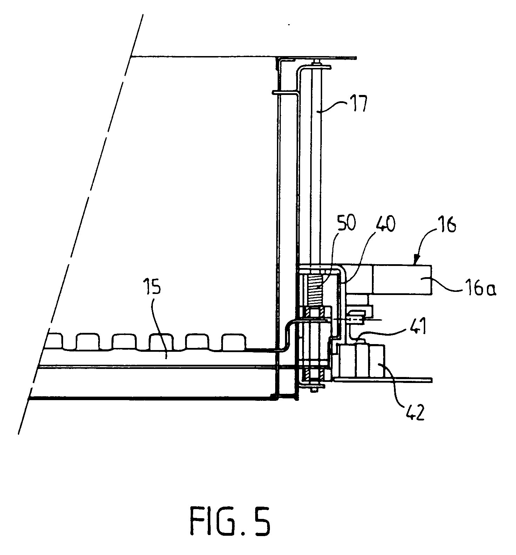

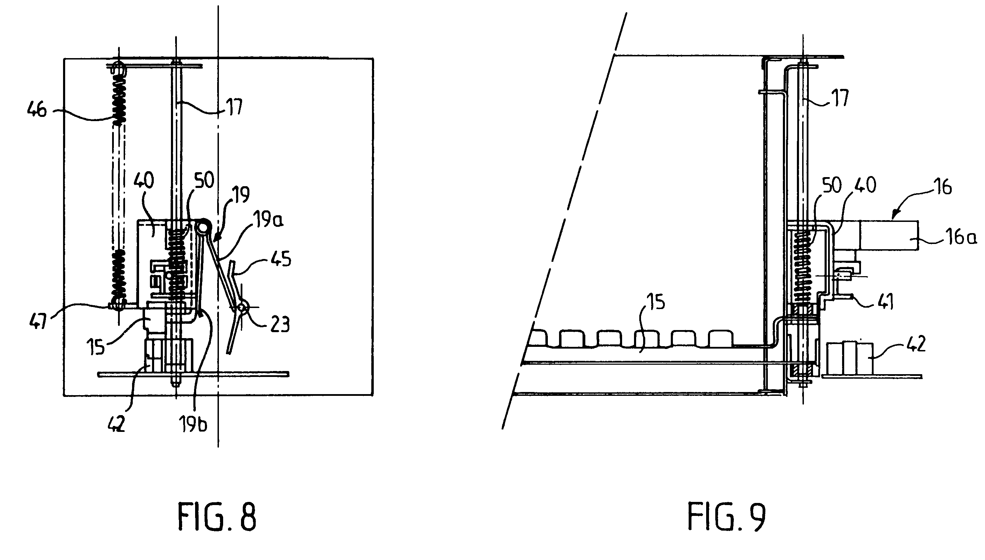

Tel que cela est montré aux figures 4 et 5 par exemple, le moyen de commande du déplacement 16 du chariot porte-pain 15 est constitué par un chariot de commande 40 monté à coulissement sur la colonne 17 et déplaçable axialement et élastiquement sur cette dernière, relativement au chariot porte-pain mobile 15 selon une course fixe, entre une position basse de butée (figures 4 et 5), dans laquelle les sous-ensembles de grillage 5, 6 sont en marche, et une position haute de rappel élastique correspondant à la position de réception d'un article à griller (figures 8 et 9).

Dans la position basse de butée, une masse polaire 41, fixée sous le chariot de commande 40, vient se verrouiller sur un électro-aimant 42 solidaire du boîtier 1 afin de fermer le circuit électrique d'alimentation des barreaux chauffants 12.

Le circuit électrique de temporisation est alors enclenché et le cycle de chauffe commence.

Le chariot de commande 40 est pourvu d'un organe d'actionnement 19, tel qu'un doigt d'actionnement, dont la position et l'encombrement lui permet, lors de la descente du chariot de commande 40, de venir en contact avec une rampe d'entraînement 45, solidaire du sous-ensemble de grillage mobile 6. Avantageusement, la rampe d'entraînement 45, est formée par une patte présentant une concavité dirigée vers le chariot de commande 40, ladite patte étant solidaire d'une extrémité d'un bras latéral 21 formant l'axe de rotation 23.

Grâce à ce montage, la descente du chariot de commande 40 permet au doigt d'actionnement 19, de venir engager progressivement la rampe d'entraînement 45 de manière à lui imprimer un mouvement de rotation selon la flèche F1, induisant un déplacement du sous-ensemble mobile 6, selon une direction de rapprochement vers le sous-ensemble de grillage fixe 5. En position basse de butée, l'action de l'organe d'actionnement 19 sur la rampe d'entraînement 45 maintient le sous-ensemble de grillage mobile 6 en application sensiblement élastique contre l'article à griller, par l'intermédiaire des grilles de serrage 13 et de l'élasticité du support 20.

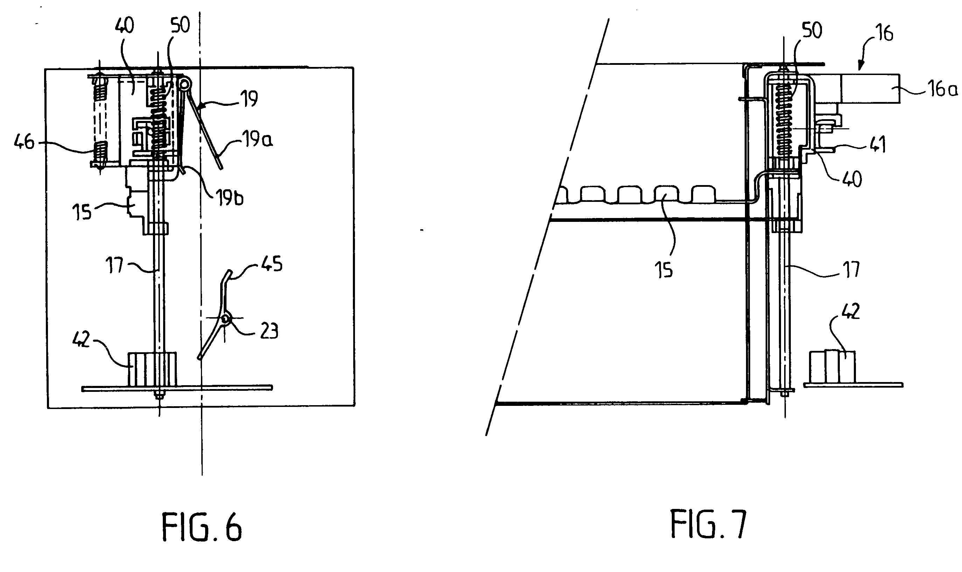

Selon une version particulièrement avantageuse de l'invention, le chariot de commande 40 est rappelé élastiquement dans sa position correspondant à la position haute de réception du chariot porte-pain mobile 15 (figures 6 et 7), par un organe de rappel élastique 46, tel qu'un ressort hélicoïdal, interposé entre le bâti et une patte externe 47 du chariot de commande 40 et maintenant le chariot de commande 40 dans sa position haute de rappel élastique.

Selon une autre variante de réalisation, l'organe de rappel élastique 46 peut-être interposé entre le bâti et le chariot porte-pain mobile 15.

Selon une version préférentielle de l'invention, le montage élastique relatif du chariot de commande 40, par rapport au chariot porte-pain mobile 15, est avantageusement réalisé par interposition d'au moins un moyen de rappel élastique 50, de préférence un ressort de compression enfilé sur la colonne 17, entre le chariot porte-pain mobile 15 et le chariot de commande 40. Ce dernier est solidaire du chariot porte-pain mobile 15, pour former un attelage. Le chariot de commande 40 est maintenu dans sa position haute de rappel élastique par le moyen de rappel élastique 50 dont la force de rappel est de préférence supérieure à celle développée par l'organe de rappel 46, et de même sens.

Le fonctionnement d'un grille-pain conforme à l'invention est le suivant.

Après introduction dans la fente de grillage 7 d'un article à griller de largeur déterminée, le chariot porte-pain mobile 15 étant dans sa position haute de réception montrée aux figures 2, 6 et 7, l'utilisateur actionne manuellement le bras de manoeuvre 16a pour déplacer le chariot de commande 40 vers le bas, le long de la colonne 17.

Au cours de son trajet de descente, le ressort 46 se tend et le chariot de commande 40 coulisse vers le bas entraînant par poussée le chariot porte-pain mobile 15 vers le bas. Au cours de cette opération de descente, le moyen de rappel élastique 50 n'est pas sollicité activement en compression et maintient simplement le chariot porte-pain mobile 15 à distance constante du chariot de commande 40, sans qu'il y ait de déplacement relatif entre les deux chariots. Dans sa phase terminale de descente, le chariot de commande 40 vient, par l'intermédiaire du doigt d'actionnement 19, engager la rampe d'entraînement 45 pour l'amener en rotation selon la flèche F1, et commander ainsi le déplacement du sous-ensemble de grillage mobile 6. La phase terminale de descente comporte d'abord une mise en butée du chariot porte-pain mobile 15 correspondant à sa position basse (figures 8 et 9), puis un déplacement du chariot de commande 40 à l'encontre du moyen de rappel élastique 50 pour venir fermer le circuit de chauffe et mettre en contact la masse polaire 41 et l'électro-aimant 42 (figures 4 et 5).

Le doigt d'actionnement 19 est avantageusement constitué d'une épingle métallique présentant une élasticité entre ses bras 19a, 19b, de manière à permettre une contrainte de pression du sous-ensemble mobile 6 contre le pain qui soit adaptable et fonction de l'épaisseur dudit pain. Dans l'exemple de réalisation montré à la figure 4, le bras 19b est en appui contre une face du chariot de commande 40, alors que le bras 19a est en appui élastique contre la rampe d'entraînement 45. Lorsque le chariot porte- pain mobile 15 vient reposer contre le fond de la fente de grillage 7 tel que cela est montré à la figure 4, le moyen de rappel élastique 50 est progressivement contraint, ce qui permet au chariot de commande 40 de se déplacer relativement au chariot porte-pain mobile 15 de manière à passer de sa position haute de rappel élastique vers sa position basse de butée dans laquelle la masse polaire 41 vient se verrouiller sur l'électro-aimant 42. Dans cette position, la temporisation est enclenchée, les résistances électriques des barreaux chauffants 12 sont sous tension et la pression du sous-ensemble de grillage mobile 6 sur l'article à griller est maximale.

Au cours du déplacement du sous-ensemble de grillage mobile 6 vers le sous-ensemble de grillage fixe 5 qui lui est opposé, la poussée du bras intermédiaire 25 en partie supérieure du réflecteur 10, et sur toute la longueur de ce dernier, en conjugaison avec l'effet stabilisateur en partie médiane du bras stabilisateur 30, contribue à un déplacement actif, équilibré et exempt de déformation dudit sous-ensemble de grillage mobile 6, quelle que soit la distance de déplacement considérée.

En fin de temporisation, l'électro-aimant 42 n'est plus alimenté et libère en conséquence la masse polaire 41.

Le ressort 46 se rétracte et entraîne le chariot de commande 40 vers sa position haute correspondant à la position de réception du chariot porte-pain mobile 15.

Simultanément, le moyen de rappel élastique 50 se détend et maintient le chariot porte-pain mobile 15 dans sa position basse, tout en permettant au chariot de commande 40 de remonter vers sa position haute de rappel élastique. Au cours de cette remontée, correspondant à la course de déplacement maximale du chariot de commande 40 relativement au chariot porte-pain mobile 15, le chariot de commande 40 actionne, par l'intermédiaire du doigt d'actionnement 19, la rampe d'entraînement 45, initiant une rotation de cette dernière selon la flèche F2 et un pré-dégagement du sous-ensemble de grillage mobile 6 dans une direction opposée au sous-ensemble de grillage fixe 5. Ce pré-dégagement est initié alors même que le chariot porte-pain mobile 15 est toujours dans sa position de butée la plus basse ce qui évite tout risque de blocage de l'article à griller dû à une mauvaise synchronisation entre toutes les pièces mobiles.

Les risques de blocage sont particulièrement accrus lorsque les pièces mobiles ont un déplacement relativement important à effectuer, tel que cela est le cas sur les grille-pain électriques de grande largeur.

Lorsque le chariot de commande 40 arrive dans sa position haute de butée il entraîne alors, en conjonction avec le ressort 46, la remontée de l'ensemble. Au cours de cette remontée, le doigt d'actionnement 19 poursuit son action sur la rampe d'entraînement 45, ce qui conduit le sous-ensemble de grillage mobile 6 vers sa position de repos extrême correspondant à celle montrée à la figure 2, dans laquelle la largeur de la fente de grillage 7 est maximale.

Il doit être noté que dans la position haute du chariot porte-pain mobile 15, il est possible de contraindre une nouvelle fois, à l'aide par exemple d'un autre organe manuel de manoeuvre, le moyen de rappel élastique 50, vers le haut du grille-pain ce qui correspond à une remontée supplémentaire dudit chariot porte-pain mobile 15. Ceci facilite la préhension de l'article panifié ayant subi le grillage, dans la mesure où il présente une plus grande partie de surface hors de la fente de grillage 7.

Selon une autre variante de réalisation, et en particulier dans le cas d'un grille-pain de grande largeur délimitant une fente de grillage au moins égale à 35 mm et de préférence sensiblement égale à 65 mm correspondant à la distance maximale de déplacement H, le grille-pain comprend un chariot porte-pain fixe 15a, monté à demeure au fond du boîtier 1. Dans ce cas le chariot porte-pain fixe 15a est avantageusement monté sensiblement en regard du chariot porte-pain mobile 15 lorsque ce dernier occupe sa position basse de grillage. Selon cet agencement, le chariot porte-pain fixe 15a est adjacent au sous-ensemble de grillage mobile 6, alors que le chariot porte-pain mobile 15 est adjacent au sous-ensemble de grillage fixe 5.

Selon une autre variante préférentielle, il est prévu un moyen amovible de limitation 60 du déplacement en éloignement du sous-ensemble de grillage mobile 6. Le moyen amovible de limitation 60 est avantageusement constitué par un loquet monté sur le boîtier 1, entre au moins une position de blocage du déplacement du sous-ensemble de grillage mobile 6 et une position de dégagement permettant un déplacement dudit sous-ensemble sur la totalité de la distance H mentionnée précédemment. Dans sa position de blocage, le loquet 60 limite le déplacement du sous-ensemble mobile 6, selon la direction f3, à une distance G, en l'empêchant de reprendre sa position extrême de repos montrée à la figure 2.

Avantageusement, la position de blocage du moyen amovible 60 permet de limiter la fente de grillage 7 à une distance au plus égale à une valeur G inférieure à la distance H et correspondant sensiblement à la largeur du chariot porte-pain mobile 15.

Avantageusement, la largeur du chariot porte-pain mobile 15 est sensiblement équivalente à celle du chariot porte-pain fixe 15a et correspond à la moitié de la largeur de la fente de grillage 7. Sur le plan pratique, la distance H sera au plus égale à 65 mm et la distance G au plus égale à 40 mm et de préférence sensiblement égale à 30-35 mm.

Il est également particulièrement intéressant de prévoir d'équiper le grille-pain d'un circuit électrique comportant au moins deux puissances de chauffe, correspondant respectivement à un mode de grillage utilisant la pleine puissance de chauffe, et un mode de réchauffage utilisant par exemple simplement la moitié de la puissance de chauffe.

Selon cet arrangement il est alors particulièrement indiqué d'associer le moyen amovible de limitation 60, de manière fonctionnelle, à un interrupteur de commande électrique des puissances de chauffe, de telle sorte qu'en position de blocage du retour du sous-ensemble de grillage mobile 6, le mode de grillage est automatiquement sélectionné dès lors que le circuit électrique de commande des barreaux de chauffe 12 est fermé. Au contraire, dans sa position de dégagement, le moyen amovible de limitation 60 permet de sélectionner automatiquement le mode réchauffage. Ceci est particulièrement intéressant, dans la mesure où il s'avère que les articles à griller de grande largeur, ne sont généralement pas destinés à être grillés mais au contraire destinés à être réchauffés.

Selon une autre variante de réalisation montrée à la figure 1, il est intéressant de prévoir une inclinaison du grille-pain par rapport au plan horizontal.

Une telle inclinaison, de l'ordre de quelques degrés, par exemple de 10 à 15 degrés, doit permettre de créer une fente de grillage 7 inclinée selon une direction permettant la création d'une force de rappel permanente agissant sur le sous-ensemble de grillage mobile 6 et donc sur l'article à griller pour les diriger vers le sous-ensemble de grillage fixe 5. En pratique, cela correspond à conférer une inclinaison d'un angle α de l'ordre de 10 à 15 degrés par rapport à la verticale V (figure 1), au plan de symétrie P de la fente de grillage 7 et aux plans d'extension des deux sous-ensembles de grillage 5, 6, cette inclinaison étant dirigée vers le côté du grille-pain comportant le sous-ensemble de grillage fixe 5.

A titre de variante complémentaire, il est également possible de réaliser un appareil dans lequel la fente de grillage 7 et les deux sous-ensembles de grillage 5, 6, de même que le plan de symétrie P s'étendent sensiblement horizontalement. Selon cette réalisation, l'appareil forme un mini-four à géométrie variable pour aliments de toutes sortes qu'ils soient solides, liquides ou pâteux, le sous-ensemble de grillage mobile 6 formant la partie supérieure de fermeture de l'appareil.

Selon une autre variante de réalisation, l'organe d'actionnement 19 est un doigt d'actionnement, solidaire du chariot porte-pain 15, et apte à engager une rampe d'entraînement 45 en rotation, du sous-ensemble de grillage mobile 6, ladite rampe étant liée aux bras latéraux 21, 22 ou au bras stabilisateur 30.

### POSSIBILITES D'APPLICATION INDUSTRIELLE

L'invention trouve son application industrielle dans la fabrication de grille-pain.

## Revendications

1. Appareil électrique de grillage ou réchauffage d'aliments, en particulier grille pain comportant un boîtier (1) avec un sous-ensemble fixe de grillage (5) et un sous-ensemble de grillage monté mobile (6) en éloignement et rapprochement du sous-ensemble fixe (5) par l'intermédiaire d'un support (20) pour former une fente de grillage (7) de largeur variable apte à s'adapter à l'épaisseur de l'article à griller, ledit support (20) comprenant deux bras latéraux (21, 22) s'étendant le long des flancs du sous-ensemble mobile (6) et supportés à rotation par leurs extrémités sur le boîtier (1), un chariot porte-pain mobile (15) axialement dans la fente entre une position haute de réception de l'article à griller et une position basse de grillage, et un moyen de commande (16) du déplacement du chariot porte-pain mobile (15) associé à un organe d'actionnement (19) apte à assurer le déplacement relatif des deux sous-ensembles (5,6) caractérisé en ce qu'il comporte :
- au moins un bras stabilisateur (30), disposé en face arrière du sous-ensemble mobile (6), relié par une première articulation (31) à ladite face arrière et par une seconde articulation (32) au boîtier (1).

2. Appareil selon la revendication 1 caractérisé en ce que le bras stabilisateur (30) est constitué par une plaque, de préférence en forme de T.

3. Appareil selon la revendication 1 ou 2 caractérisé en ce que le support (20) comporte en outre un bras intermédiaire (25) solidaire du sous-ensemble mobile (6) et joignant les deux bras latéraux (21,22).

4. Appareil selon la revendication 3 caractérisé en ce que les deux bras latéraux (21, 22) et le bras intermédiaire (25) forment un support sensiblement en U.

5. Appareil selon la revendication 4 caractérisé en ce que le bras intermédiaire (25) s'étend sensiblement le long et contre la partie supérieure du sous-ensemble mobile (6).

6. Appareil selon l'une des revendications 1 à 5 caractérisé en ce que l'organe d'actionnement (19) est un doigt d'actionnement, solidaire du chariot porte-pain (15), et apte à engager une rampe d'entraînement (45) en rotation, du sous-ensemble de grillage mobile (6), ladite rampe étant liée aux bras latéraux (21, 22) ou au bras stabilisateur (30).

7. Appareil selon la revendication 6 caractérisé en ce que le doigt d'actionnement (19) est formé par une épingle dont l'un des bras (19a) est destiné à venir en appui élastique contre la rampe d'entraînement (45).

8. Appareil selon l'une des revendications 1 à 7 caractérisé en ce que la fente de grillage (7) est, dans la position la plus éloignée des deux sous-ensembles (5, 6), au moins égale à 35 mm et de préférence comprise entre 35 et 65 mm.

9. Appareil selon l'une des revendications 1 à 8 caractérisé en ce qu'il est incliné par rapport à l'horizontale, de façon à permettre la création d'une force de rappel permanente agissant sur le sous-ensemble mobile (6) pour le diriger vers le sous-ensemble fixe (5).

10. Appareil selon la revendication 9 caractérisé en ce que l'inclinaison de la fente de grillage (7) et des sous-ensembles de grillage (5,6) est comprise entre 10 et 15 degrés.

## Claims

1. An electric appliance for toasting or heating food, in particular a toaster, including a housing (1) with a stationary toasting subassembly (5) and a moving toasting subassembly (6) mounted to move towards and away from the stationary subassembly (5) by means of a support (20) so as to form a toasting slot (7) of variable width suitable for being adapted to match the thickness of the item to be toasted, said support (20) including two end arms (21, 22) extending along respective ends of the moving subassembly (6) and supported in rotation on the housing (1) by their ends, a moving bread-carrier rack (15) mounted to move axially in the slot between a reception high position in which it receives the item to be toasted, and a toasting low position, and control means (16) for displacing the moving bread-carrier rack (15), which means are associated with an actuating member (19) suitable for displacing the two subassemblies (5, 6) relative to each other, said appliance being characterized in that it includes:
at least one stabilizer arm (30) disposed on the rear face of the moving subassembly (6), and connected via a first hinge (31) to said rear face, and via a second hinge (32) to the housing (1).

2. An appliance according to claim 1, characterized in that the stabilizing arm (30) is constituted by a plate that is preferably T-shaped.

3. An appliance according to claim 1 or 2, characterized in that the support (20) further includes an intermediate arm (25) secured to the moving subassembly (6) and interconnecting the two end arms (21, 22).

4. An appliance according to claim 3, characterized in that the two end arms (21, 22), and the intermediate arm (25) form a substantially U-shaped support.

5. An appliance according to claim 4, characterized in that the intermediate arm (25) extends substantially along and against the top portion of the moving subassembly (6).

6. An appliance according to any one of claims 1 to 5, characterized in that the actuating member (19) is an actuator finger secured to the bread-carrier rack (15), and suitable for engaging a rotary drive strip (45) for driving the moving toasting subassembly (6), said strip being coupled to the end arms (21, 22) or to the stabilizing arm (30).

7. An appliance according to claim 6, characterized in that the actuator finger (19) is formed by a hairpin-like pin organized so that one of its arms (19a) comes into resilient contact against the drive strip (45).

8. An appliance according to any one of claims 1 to 7, characterized in that, when the two subassemblies (5, 6) are in the position in which they are furthest apart from each other, the toasting slot (7) is at least 35 mm wide, and preferably in the range 35 mm to 65 mm wide.

9. An appliance according to any one of claims 1 to 8, characterized in that it slopes relative to the horizontal, so as to make it possible to generate a permanent return force acting on the moving subassembly (6) to urge it towards the stationary subassembly (5).

10. An appliance according to claim 9, characterized in that the slope of the toasting slot (7) and of the toasting subassemblies (5, 6) lies in the range 10 degrees to 15 degrees.

## Patentansprüche

1. Elektrisches Gerät zum Rösten oder Erwärmen von Nahrungsmitteln, insbesondere Brotröster, mit einem Gehäuse (1), das eine feststehende Röst-Unterbaugruppe (5) sowie eine Röst-Unterbaugruppe (6) aufweist, die von der feststehenden Unterbaugruppe (5) weg oder auf diese zu bewegbar mittels eines Trägers (20) angebracht ist, um einen Röstschlitz (7) mit variabler Breite zu bilden, der sich an die Dicke des zu röstenden Nahrungsmittels anpassen kann, wobei der Träger (20) zwei Seitenarme (21, 22) aufweist, die sich entlang von Seitenteilen der bewegbaren Unterbaugruppe (6) erstrecken und mit ihren Enden an dem Gehäuse (1) drehbar gelagert sind, einem Brot-Trägerschlitten (15), der in dem Schlitz zwischen einer oberen Stellung zur Aufnahme des zu röstenden Nahrungsmittels und einer unteren Röststellung axialverschiebbar angebracht ist, und einem Mittel (16) zur Steuerung der Verstellung des beweglichen Brot-Trägerschlittens (15), das einem Betätigungsorgan (19) zugeordnet ist, welches die Relativverstellung der beiden Unterbaugruppen (5,6) gewährleisten kann, dadurch gekennzeichnet, daß es enthält:
- wenigstens einen Stabilisierungsarm (30), der an der Rückseite der beweglichen Unterbaugruppe (6) angebracht ist und durch ein erstes Gelenk (31) mit der Rückseite und durch ein zweites Gelenk (32) mit dem Gehäuse (1) verbunden ist.

2. Gerät nach Anspruch 1, dadurch gekennzeichnet, daß der Stabilisierungsarm (30) durch eine vorzugsweise T-förmige Platte gebildet ist.

3. Gerät nach Anspruch 1 oder Anspruch 2, dadurch gekennzeichnet, daß der Träger (20) außerdem einen Mittelarm (25) aufweist, der fest mit der beweglichen Unterbaugruppe (6) verbunden ist und die beiden Seitenarme (21, 22) miteinander verbindet.

4. Gerät nach Anspruch 3, dadurch gekennzeichnet, daß die beiden Seitenarme (21, 22) und der Mittelarm (25) einen im wesentlichen U-förmigen Träger bilden.

5. Gerät nach Anspruch 4, dadurch gekennzeichnet, daß sich der Mittelarm (25) im wesentlichen entlang dem oberen Abschnitt der beweglichen Unterbaugruppe (6) und an diesem in Anlage erstreckt.

6. Gerät nach einem der Ansprüche 1 bis 5, dadurch gekennzeichnet, daß das Betätigungsorgan (19) ein Betätigungszapfen ist, der fest mit dem Brot-Trägerschlitten (15) verbunden ist und an einer Betätigungsrampe (45) der beweglichen Röst-Unterbaugruppe (6) durch Drehung angreifen kann, wobei die Rampe mit den Seitenarmen (21, 22) oder dem Stabilisierungsarm (30) verbunden ist.

7. Gerät nach Anspruch 6, dadurch gekennzeichnet, daß der Betätigungszapfen (19) durch ein haarnadelförmiges Teil gebildet ist, dessen einer Schenkel (19a) dafür vorgesehen ist, an der Mitnahmerampe (45) in elastische Anlage zu gelangen.

8. Gerät nach einem der Ansprüche 1 bis 7, dadurch gekennzeichnet, daß der Röstschlitz (7) in der Stellung, in der die beiden Unterbaugruppen (5, 6) einander am weitesten angenähert sind, wenigstens gleich 35 mm und vorzugsweise zwischen 35 und 65 mm beträgt.

9. Gerät nach einem der Ansprüche 1 bis 8, dadurch gekennzeichnet, daß es bezüglich der Horizontalen geneigt ist, so daß eine permanente Rückstellkraft erzeugt werden kann, die auf die bewegliche Unterbaugruppe (6) einwirkt, um diese zur feststehenden Unterbaugruppe (5) zu führen.

10. Gerät nach Anspruch 9, dadurch gekennzeichnet, daß die Neigung des Röstschlitzes (7) und der Röst-Unterbauguppen (5, 6) zwischen 10 und 15 Grad beträgt.
